# EUROPEAN PATENT APPLICATION

(11) **EP 0 812 992 A1**
(43) Date of publication of application: **17.12.1997**
(21) Application number: 97302970.5
(22) Date of filing: 30.04.1997
(51) Int. Cl.: F16B 7/10

(54) **Integral snap button and anti-rattle member**

(30) Priority: 13.06.1996 US 662453
(71) Applicant: INVACARE CORPORATION, Elyria, Ohio 44036 (US)
(72) Inventor: Obitts, Shane, Elyria, Ohio 44035 (US)
(74) Representative: Purvis, William Michael Cameron

(57) **Abstract**

An integral snap button and anti-rattle member (40) is provided for locking the length of and decreasing the play and rattle between inner (24) and outer (12) tubes of an adjustable-length telescoping tube assembly. The member (40) fits into the inner (24) and outer (12) tubes and a button (42) formed thereon passes through an opening (44) in the inner tube (24) and one of a plurality of openings (14) in the outer tube (12) adjustably to lock the length of the assembly. A collar (56) formed on the member (40) fits within the outer telescoping tube (12) to decrease play and rattle between the tubes (12,24) of the assembly. The member (40) is easily manufactured as an integral or one-piece member and is easily installed in the assembly.

## Description

This invention pertains to the art of adjustable-length telescoping tubes and more particularly to the locking mechanism therein.

The invention is particularly applicable to adjustable-length canes, crutches, walkers, and the like and will be described with particular reference thereto. However, it will be appreciated that the invention has broader applications such as adjustable height chairs and commodes and may be advantageously employed in other environments and applications.

Adjustable-length tubes are typically composed of at least two telescoping, hollow, sleeves or tubes. The basic assembly comprises a first or inner tube slidably inserted in a second or outer tube. The inner tube has a sidewall opening while the outer tube has a series of openings spaced lengthwise along its sidewall. A spring-loaded button, or snap button as it is commonly referred to , is positioned in the interior of the inner tube. The button is dimensioned to protrude through the sidewall opening in the inner tube and outwardly through one of the openings in the outer tube.

A spring element, typically a U-shaped wire, is secured to the back of the button. One prong of the wire is attached to the button and the other prong extends to the opposite side of the inner tube sidewall. The wire urges the button through the opening in the inner tube sidewall. Since the button also protrudes through one of the openings in the outer tube sidewall, the tubes are locked relative to one other, thus locking the length of the telescoping tube assembly. Patent specifications US-A-4,044,784; US-A-4,528,998; and US-A-5,139,040 generally show and describe this type of snap button assembly.

To adjust the length of the assembly, the spring-loaded button is pushed against the biasing force of the spring element through the outer tube opening toward the inner tube. Once the snap button clears the interior surface of the outer tube, the tubes are free to slide lengthwise relative to one another. The outer tube is then moved to a desired position relative to the inner tube, and the button aligned with a selected opening in the outer tube to achieve the desired axial length of the tube assembly.

One problem with prior art arrangements is that the snap button could be inadvertently moved from its registration with the opening in the inner tube if excessive force is imposed on the snap button. The outer surface of the button can potentially pass beneath the sidewall of the inner tube, allowing the snap button to become dislodged therein. Returning the button to the inner tube opening, unfortunately, requires disassembly to access and reposition the spring button in the inner tube.

Some adjustable-length tube assemblies have devices which decrease the play and rattle between the tubes of the assembly. For example, patent specification US-A-4,085,763 addresses this problem in a cane by employing an annular stabilizing collar. The collar is slidably received over the inner tube and held in place with a wing-type male set screw. By tightening down the set screw, the outer tube is stabilized relative to the inner tube.

In patent specification US-A-4,044,784, a swivel lock is used to fix an outer tube with respect to an inner tube. The swivel lock includes a sleeve in threaded engagement with an externally threaded portion on one end of the outer tube. The sleeve fits closely about the exterior surface of the inner tube to limit movement of the outer tube.

Patent specifications US-A-4,596,484 and US-A-4,029,279 show stabilizing arrangements using a lever type device. However, the locking mechanisms of these devices add additional weight, are fairly complex and difficult to use.

In the above patents, the anti-rattle mechanism is separate from the snap button. This requires additional manufacturing and assembly steps which add significantly to the cost thereof.

According to one aspect of the invention there is provided an integral snap button and anti-rattle collar member to be received in first and second components, the member comprising:
a body to be received in the first component, the body having a tab portion partially separated from the remainder of the body and capable of limited flexing movement;
a collar formed on the body and having an outer peripheral dimension larger than the outer peripheral dimension of the body, the collar being receivable in the second component to eliminate rattle between the first and second components; and
a snap button extending outwardly from the tab portion selectively to secure the first and second components against relative movement.

According to another aspect of the invention there is provided an adjustable-length support assembly comprising:
a first component having at least a pair of openings therein;
a second component having an opening therein, the second component being operatively received in the first component and being selectively movable relative thereto;
an integral anti-rattle and snap button member received in the first and second components, a first portion of the member closely, but slidably, engaging the first component and a second portion of the member secured to the second component, the member further including a snap button extending outwardly through the second component opening and disposed for selective receipt through one of the openings of the first component when aligned over the second component opening whereby the first and second components are locked against further relative movement.

According to a further aspect of the invention there is provided a selectively-extendable leg of a medical patient aid device comprising:
a first tubular component extendable from an associated patient aid device;
a second tubular component dimensioned for sliding telescoping receipt with the first tubular component whereby the combined length of the first and second tubular components may be selectively altered;
an opening in the first tubular component and plural openings in the second tubular component which may be selectively aligned with the opening in the first tubular component;
an integral anti-rattle snap button member received in the first tubular component and having (i) a snap button portion that extends through the opening in the first tubular component and can extend through one of the plural openings in the second tubular component when aligned therewith to lock the tubular components against relative movement, and (ii) a collar portion closely received in the second tubular component to eliminate rattle between the telescoping tubular members.

Such a collar member can provide easy adjustment of the length of the tubes and a high degree of stability, can be simple and economical to manufacture and install, can easily be locked and unlocked, and can minimize rattle when in use.

In accordance with one embodiment of the invention, an integral snap button and anti-rattle member includes a generally tubular body having a collar at one end and a flexible tab at the other end carrying a button thereon. The flexible tab provides a spring bias to the button when received in the tube assembly. The member can be received in one end of an inner tube with the button protruding radially outward therefrom. The outer tube slides over the collar and button of the member. The outer tube is slid to a desired position along the inner tube and the button is aligned with the nearest opening in the outer tube sidewall. The biasing force of the flexible tab urges the button through the opening in the outer tube, thus locking the relative positions of the tubes. The collar contacts the interior of the outer tube to limit any play and rattle between the tubes.

The member may include a spring to bias the flexible tab through the opening in the outer tube.

The integral anti-rattle/snap button member may have a pair of spaced apart cutouts on either side of the tab allowing flexing movement of the tab and providing a returning force to the button after the button is depressed.

Preferably the integral member is formed of plastic and a metal cap is provided that fits over the button.

One advantage obtainable by the invention is the unification of the snap button and the anti-rattle member into one member thereby eliminating inventory, and manufacturing and assembly steps.

Another possible advantage of the invention can reside in the ease with which the integral snap button is positioned and retained in the assembly.

The invention is illustrated by way of example in the accompanying drawings, in which:
Figure 1 is a perspective view of an adjustable-length cane using the subject invention;
Figure 2 is a longitudinal cross-sectional view of an integral button and anti-rattle member according to the invention mounted in a telescoping tube assembly;
Figure 3 is an elevational view of the integral button and anti-rattle member of Figure 2;
Figure 4 is an elevational view of the integral button and anti-rattle member taken generally from the right-hand side of Figure 3;
Figure 5 illustrates a metal cap placed over the button;
Figure 6 is an elevational view of a second embodiment of integral button and anti-rattle member; and
Figure 7 is an elevational view of the second embodiment of the integral button and anti-rattle element taken generally in the direction of arrow 7 in Figure 6.

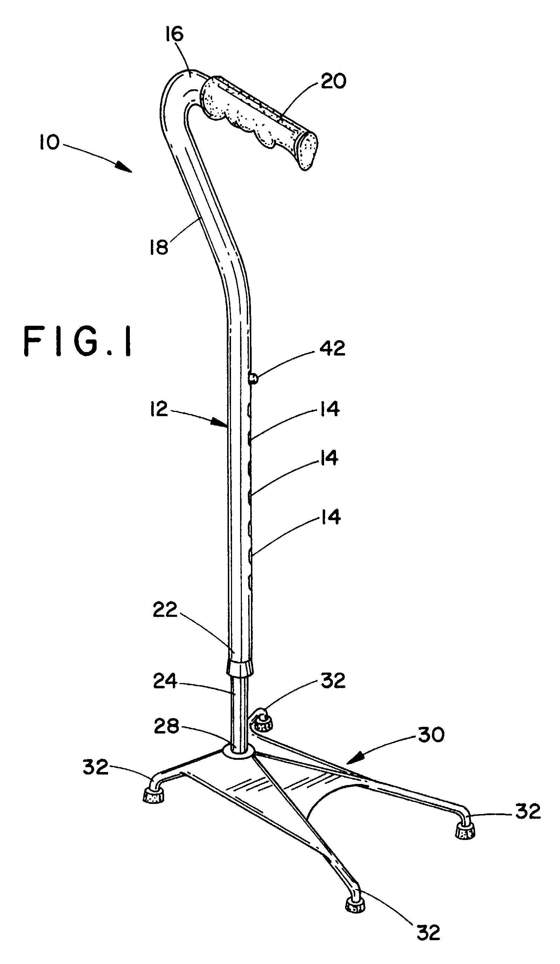

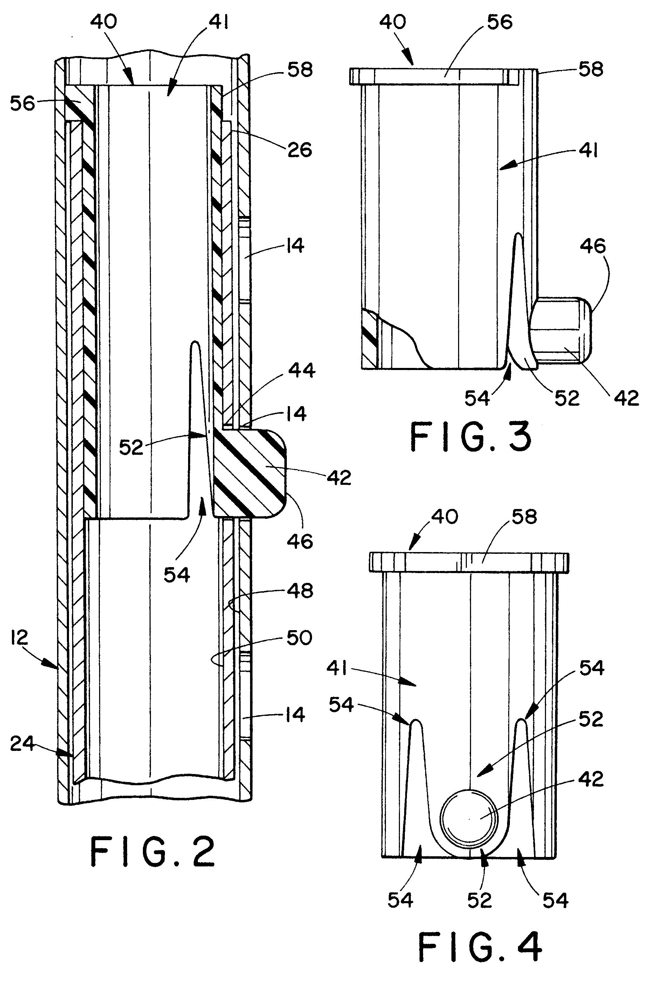

Referring to the drawings, Figure 1 shows an adjustable-length cane 10 having a first or outer hollow tube 12 with a plurality of longitudinally or axially spaced openings 14. In the environment of Figure 1, the first tube 12 is integrally formed or bent into a generally horizontally extending handle 16 at a first or upper end 18. A hand grip 20 is typically received over the upper end 18 and is configured to comfortably receive a user's hand in gripping relation. A second or lower end 22 of the outer tuber 12 is open ended and can receive in telescoping relation a second or hollow inner tube 24. According to the preferred embodiment, the inner tube 24 is open at a first or upper end 26 (Figure 2) and a second or lower end 28 is mounted or secured to a base 30. The base 30 has four spaced legs 32 defining an enlarged footprint that provides a stable configuration.

More particularly, Figure 2 illustrates the outer and inner tubes 12, 24 and an integral snap button and anti-rattle member 40 of the present invention. The member 40 preferably comprises a generally cylindrical, open ended body 41 that is a frictionally fit within the inner tube 24. A button 42 extends generally radially outward from the body. The button 42 protrudes through an opening 44 in the inner tube 24 and through one of the plurality of openings 14 in the outer tube 12 to hold the outer and inner tubes 12,24 in locked relation to one another. Preferably, the button 42 has a curved face 46 so that as the button is manually depressed radially inward through one of the openings 14, the curved face of the button easily passes beneath an interior surface 48 of the outer tube 12. Then, when the inner tube 24 is pushed or pulled in a lengthwise direction relative to the outer tube 12, the curved face of the button, when depressed, easily slides beneath an interior surface 48 of the outer tube 12 until another of the plurality of openings 14 is aligned with the button.

To prevent excessive depression of the button, the dimensions of the openings 14,44 in the inner and outer tubes, respectively, and of the button 42 are selected so that a user's finger cannot push the face 46 of the button 42 beneath an interior surface 50 of the inner tube 24. Moreover, the frictional fit between the snap button/anti-rattle member and the inner tube maintains proper alignment between the button and the inner tube opening even if the button is depressed beneath the interior surface of the inner tube. It will be appreciated that other means of preventing the dislodging of the integral member 40 relative to the inner tube 24 may include a stop (not shown) located in the path of the inwardly flexing button 42 to limit inward depression thereof.

Referring to Figures 3 and 4, the button 42 is preferably integrally formed on a flexible portion or tab 52 of the body 41. The tab 52 is partially separated from the remainder of the body by a pair of longitudinal slits or cutouts 54. The cutouts 54 allow the tab to flex radially inward when manual depression force is exerted on the button 42 to adjust the cane length. The outward biasing force of the flexible tab 52 then urges the button 42 outwardly through the desired one of the openings 14.

A collar 56 is formed on one end of the body 41. The collar 56 has an outer peripheral dimension slightly greater than an outer peripheral dimension of the inner tube 24 and generally equal to the inner peripheral dimension of the outer tube 12. The collar 56 thus engages or abuts the interior surface 48 of the outer tube 12. Thus, the frictional engagement between the body 41 and the inner tube 24, in conjunction with the engagement between the collar 56 and the outer tube 12, eliminates excessive play or rattle between the telescoping tubes 12,24.

The collar 56 may be discontinued along a peripheral portion to form an indentation or a gap 58 preferably at a region longitudinally overlying the button 42. This allows the length of the flexible tab 52 to lie generally flush with the interior surface 48 of the inner tube 24. The indentation or gap 58 may range from complete discontinuity of the collar to only a depression in the general peripheral dimension of the collar 56. The purpose of the indentation or gap is to increase the stability of the tab 52 and button 42, and ensure maximal protrusion of the button 42 through the opening 44 in the inner tube 24.

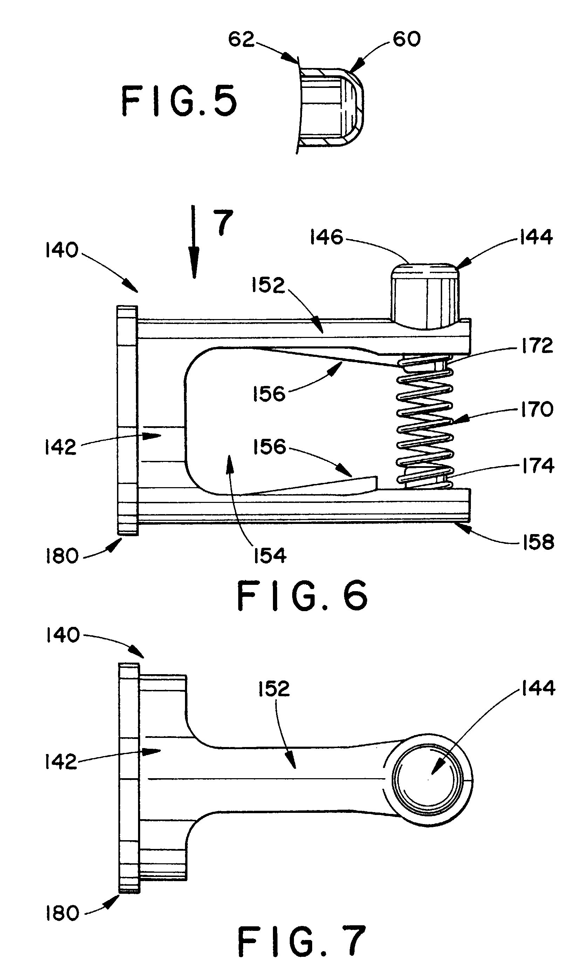

Figure 5 shows a metal cap 60 that can be positioned over the button to increase its strength. Since the button is exposed to shearing forces from contact with the inner and outer tubes, the metal cap 60 is placed over the button to limit the adverse effect of these forces on the button. The metal cap is secured to the button, for example, with an adhesive. The metal cap 60 can also be provided with a lower rim or lip 62 that limits outward extension of the cap through the inner tube opening 44.

Figures 6 and 7 illustrate a second preferred embodiment of the integral button and anti-rattle member for use in outer and inner hollow tubes 12,24 such as shown in Figures 1 and 2. Referring to Figure 6, an integral member 140 comprises a body 142 and a button 144. In similar manner to the integral member of the first preferred embodiment, the button 142 protrudes through openings in the inner and outer tubes to hold them in locked relation to one another. The button has a curved face 146 to allow the face to easily pass beneath an interior surface 48 of the outer tube.

In the arrangement of Figure 6, the button is integrally formed on a flexible portion or first tab 152 of the body 142. The first tab 152 is partially separated from the remainder of the body by a pair of enlarged cutouts 154. The cutouts allow the first tab 152 to flex radially inward when a manual depression force is exerted on the button 144. The first tab is strengthened by means of a wedge-shaped ridge 156 formed on an interior surface of the first tab 152. Opposite the first tab 152 on the body 142 is a second tab 158. The second tab 158 is also strengthened by a wedge-shaped ridge 156 formed on an interior surface of the second tab.

A helical spring 170 extends between the first and second tabs 152,158. An end of spring 170 is stabilized against the first tab by a first nub or projection 172 which preferably lies opposite the button on the first tab. The first nub 172 extends into the spring a predetermined distance to prevent the spring from dislodging. Similarly, the other end of spring 170 is stabilized against the second tab by a second nub 174 which extends into the spring. Other means of attaching the spring 170 to the first and second tabs 152,158 may be used if desired.

A collar 180 is defined on one end of the body 142. The collar 180 has an outer peripheral dimension slightly greater than an outer peripheral dimension of the inner tube 24 of Figure 2 and generally equal to the inner peripheral dimension of the outer tube 12. The collar 180 thus abuts the interior surface 48 of the outer tube 12 in a close fitting relation. This allows the inner and outer tubes to slide relative to one another and also serves the anti-rattle purpose described above.

While the preferred composition of the integral snap button/anti-rattle members 40 and 140 is plastics or fiber reinforced plastics, other materials may be suitable. Plastics is preferred because of the ease with which the member can be moulded, i.e., the member formed as a continuous, homogeneous structure, as opposed to being formed as separate elements and subsequently combined. Additionally, the plastics has some resilient properties that are desired for close fit engagement as an anti-rattle device. Nevertheless, the invention is not limited to the particular materials of construction.

Preferred embodiments of the invention have been described. It will be understood, however, that the adjustable-length cane described herein is but one of many devices capable of using the integral snap button/anti-rattle member of the invention.

## Claims

1. An integral snap button and anti-rattle collar member (40,140) to be received in first and second components (24,12), the member (40,140) comprising:
a body (41,142) to be received in the first component (24), the body (41,142) having a tab portion (52,152) partially separated from the remainder of the body (41,142) and capable of limited flexing movement;
a collar (56,180) formed on the body (41,142) and having an outer peripheral dimension larger than the outer peripheral dimension of the body (41,142), the collar (56,180) being receivable in the second component (12) to eliminate rattle between the first and second components (24,12); and
a snap button (42,144) extending outwardly from the tab (52,152) portion selectively to secure the first (24) and second (12) components against relative movement.

2. A member according to claim 1, further comprising a cutout (54,154) in the body on a side of the tab (52,152) portion allowing flexing of the tab portion (52,152).

3. A member according to claim 1, further comprising a spring (170) in engagement with the tab (152).

4. A member according to claim 1, wherein the collar (56,180) is discontinuous along a peripheral portion therein.

5. A member according to claim 1, further comprising a metal cap (60) received over the snap button (42).

6. An adjustable-length support assembly comprising:
a first component (12) having at least a pair of openings (14) therein;
a second component (24) having an opening (44) therein, the second component (24) being operatively received in the first component (12) and being selectively movable relative thereto;
an integral anti-rattle and snap button member (40,140) received in the first and second components, a first portion (56,180) of the member closely, but slidably, engaging the first component (12) and a second portion of the member (40,140) secured to the second component (24), the member (40,140) further including a snap button (42,144) extending outwardly through the second component opening (44) and disposed for selective receipt through one of the openings (14) of the first component (12) when aligned over the second component opening (44) whereby the first (12) and second (24) components are locked against further relative movement.

7. An assembly according to claim 6, further comprising a flexible tab portion (52,152) defined on the member for selective depression inward when the snap button (42,142) is depressed whereby the first and second components may be moved relative to one another until one of the openings (14) in the first component (12) is aligned with the second component opening (44).

8. An assembly according to claim 7, wherein the tab portion (52,152) is partially separated from the remainder of the member by a pair of cutouts (54,152) on either side of the tab portion (52,152).

9. An assembly according to claim 6, wherein the member (40,140) is formed primarily of plastics.

10. An assembly according to claim 8, further comprising a metal cap (60) received over the snap button (40).

11. An assembly according to claim 6, wherein the first portion of the member (40,140) includes an enlarged diameter collar (56,180) for receipt in the first component (12) and being dimensioned to prevent insertion into the second component (24).

12. An assembly according to claim 11, wherein the collar (56,180) is not circumferentially continuous.

13. An assembly according to claim 8, wherein the cutouts (54,154) are generally V-shaped and extend along opposite edges of the tab portion (52,152).

14. A selectively-extendable leg of a medical patient aid device (10) comprising:
a first tubular component (24) extendable from an associated patient aid device;
a second tubular component (12) dimensioned for sliding telescoping receipt with the first tubular component (24) whereby the combined length of the first and second tubular components may be selectively altered;
an opening (44) in the first tubular component (24) and plural openings (14) in the second tubular component (12) which may be selectively aligned with the opening (44) in the first tubular component (24);
an integral anti-rattle snap button member (40,140) received in the first tubular component (24) and having (i) a snap button portion (42,144) that extends through the opening (44) in the first tubular component (24) and can extend through one of the plural openings (14) in the second tubular component (12) when aligned therewith to lock the tubular components (24,12) against relative movement, and (ii) a collar portion (56,160) closely received in the second tubular component (12) to eliminate rattle between the telescoping tubular members.

15. A device according to claim 14, wherein the member (40,140) includes a flexible tab portion (52,152) that carries the snap button (42,144) and flexes generally transversely inward upon depression of the snap button (42,144) to allow the combined length of the tubular components to be selectively altered.

16. A device according to claim 14, wherein the tab portion (52,152) is separated from the remainder of the member by a pair of recesses (54,154) disposed on opposite sides of the snap button (42,144).

17. A device according to claim 14, wherein the member (40,144) is formed primarily of plastics.

18. A device according to claim 17, wherein the member (40,144) includes a metal cap (60) received over the snap button (42,144).
